# EUROPEAN PATENT APPLICATION

(11) **EP 4 340 186 A1**
(43) Date of publication of application: **20.03.2024**
(21) Application number: 21941923.1
(22) Date of filing: 13.05.2021
(51) Int. Cl.: H02K 5/00

(54) **MOTOR**

(71) Applicant: MITSUBISHI ELECTRIC CORPORATION, Chiyoda-ku Tokyo 100-8310 (JP)
(72) Inventor: WASHINO, Masaomi, Tokyo 100-8310 (JP)
(74) Representative: Meissner Bolte Partnerschaft mbB
(86) International application number: PCT/JP2021/018231
(87) International publication number: WO 2022/239190

(57) **Abstract**

A motor (1) includes a case (10), a conductive shaft (18), a bearing (20, 25), a rotor core (30), a coil (15), and an electrostatic shield (40, 45). The rotor core (30) has a ring groove (31a, 31b). The rotor core (30) includes a first core portion (33), a second core portion (34), and a third core portion (35). At least one of the first core portion (33), the second core portion (34), or the third core portion (35) is formed of an insulative material. The electrostatic shield (40, 45) is disposed between the coil (15) and the conductive shaft (18) and electrically connected to the conductive case portion. A part of the electrostatic shield (40, 45) is within the ring groove (31a, 31b).

## Description

### TECHNICAL FIELD

The present disclosure relates to a motor.

### BACKGROUND ART

Japanese Patent Laying-Open No. 2000-270507 (PTL 1) discloses a motor including a stator, a rotor having a rotation shaft, a housing, an end bracket, a bearing device, and an electrostatic shielding member. The stator includes a stator core and a coil. The end bracket holds the rotation shaft with the bearing device interposed. The electrostatic shielding member is a non-magnetic metal conductor. The electrostatic shielding member is disposed in a gap between the stator and the rotor.

### CITATION LIST

### PATENT LITERATURE

PTL 1: Japanese Patent Laying-Open No. 2000-270507

### SUMMARY OF INVENTION

### TECHNICAL PROBLEM

In the motor described in PTL 1, the electrostatic shielding member is disposed in a gap between the stator and the rotor and therefore the electrostatic shielding member is disposed near the coil. The electrostatic shielding member needs to be formed of a non-magnetic material in order to avoid adverse effects of the electrostatic shielding member on a distribution of magnetic field formed by the coil. This limits the choices of materials of the electrostatic shielding member.

The present disclosure is made in view of the above problem and an object of the present disclosure is to provide a motor capable of preventing electric corrosion in the bearing and having a wider choices of materials of the electrostatic shield.

### SOLUTION TO PROBLEM

A motor according to the present disclosure includes a case, a conductive shaft, a bearing, a rotor core, a stator core, a coil, and an electrostatic shield. The case includes a conductive case portion. The conductive shaft is spaced apart from the case. The bearing supports the conductive shaft rotatably relative to the conductive case portion. The rotor core is fixed to the conductive shaft. The stator core is opposed to the rotor core. The coil is wound around the stator core. The electrostatic shield is fixed to the conductive case portion. The case contains the bearing, the rotor core, the stator core, the coil, and the electrostatic shield. The bearing includes a conductive outer ring, a conductive inner ring, a plurality of rolling elements, and an insulative lubricant. The conductive outer ring is fixed to the conductive case portion. The conductive inner ring is fixed to the conductive shaft. The rolling elements are disposed in a rollable manner between the conductive outer ring and the conductive inner ring. The insulative lubricant is sealed in a bearing space between the conductive outer ring and the conductive inner ring. The rotor core has a ring groove. The rotor core includes a first core portion proximate to the stator core relative to the ring groove, a second core portion proximate to the conductive shaft relative to the ring groove, and a third core portion between the first core portion and the second core portion. At least one of the first core portion, the second core portion, or the third core portion is formed of an insulative material. The electrostatic shield is disposed between the coil and the conductive shaft and electrically connected to the conductive case portion. A part of the electrostatic shield is within the ring groove.

### ADVANTAGEOUS EFFECTS OF INVENTION

The electrostatic shield can shield the conductive shaft from the coil. The capacitance between the coil and the conductive shaft is reduced. The potential difference between the coil and the conductive shaft during operation of the motor is increased, and the potential difference between the conductive shaft and the case during operation of the motor is reduced. Dielectric breakdown of the insulative lubricant during operation of the motor is prevented, and flowing of shaft current between the outer ring and the inner ring is prevented. Occurrence of electric corrosion in the inner ring, the outer ring, and a plurality of rolling elements can be prevented.

Further, since a part of the electrostatic shield is within the ring groove, the gap between the electrostatic shield and the coil can be increased. Not only a non-magnetic material but also a magnetic material can be selected as the electrostatic shield. The choices of materials of the electrostatic shield can be increased.

### BRIEF DESCRIPTION OF DRAWINGS

Fig. 1 is a schematic cross-sectional view of a motor in a first embodiment.
Fig. 2 is a schematic circuit diagram of the motor in the first embodiment connected to a current supply device.
Fig. 3 is a schematic cross-sectional view of a motor in a second embodiment.
Fig. 4 is a schematic cross-sectional view of a motor in a third embodiment.
Fig. 5 is a schematic cross-sectional view of a motor in a fourth embodiment.
Fig. 6 is a schematic cross-sectional view of a motor in a fifth embodiment.
Fig. 7 is a schematic cross-sectional view of a motor in a sixth embodiment.
Fig. 8 is a schematic cross-sectional view of a motor in a seventh embodiment.
Fig. 9 is a schematic cross-sectional view of a motor in an eighth embodiment.

### DESCRIPTION OF EMBODIMENTS

Embodiments of the present disclosure will be described below. The same configuration is denoted by the same reference number and a description thereof will not be repeated.

### First Embodiment

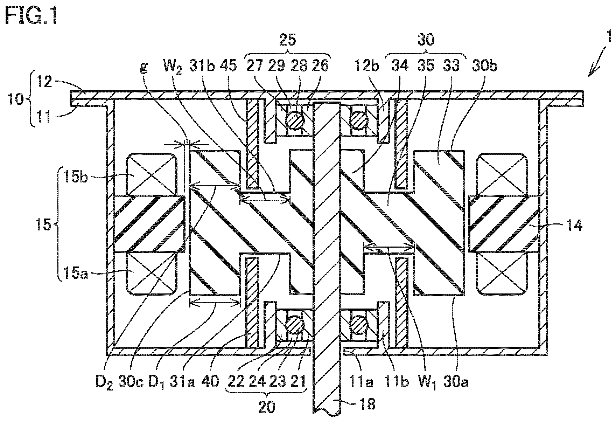

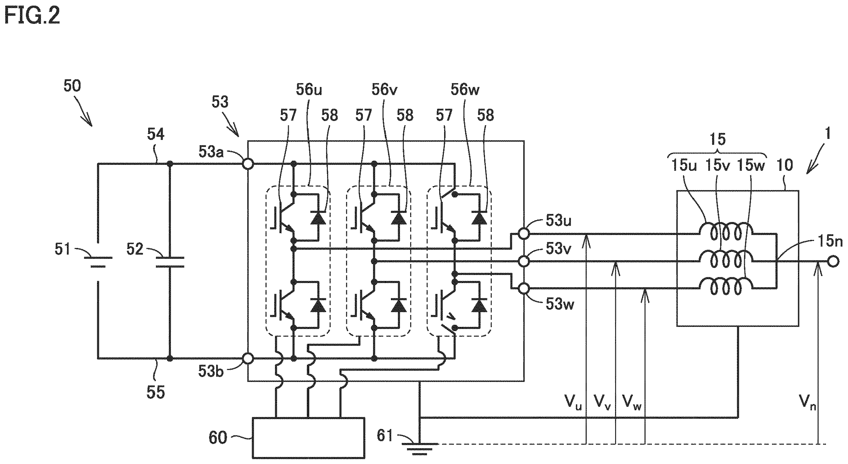

Referring to Fig. 1 and Fig. 2, a motor 1 in a first embodiment will be described. Referring to Fig. 1, motor 1 mainly includes a case 10, a stator core 14, a coil 15, a conductive shaft 18, bearings 20 and 25, a rotor core 30, and electrostatic shields 40 and 45.

Case 10 contains stator core 14, coil 15, bearings 20 and 25, rotor core 30, and electrostatic shields 40 and 45. Case 10 includes a frame 11 and a bracket 12. Frame 11 includes a bottom wall and a side wall. Frame 11 (bottom wall) has a hole 11a. The bottom wall of frame 11 is a bottom wall of case 10, and the side wall of frame 11 is a side wall of case 10. Bracket 12 is opposed to the bottom wall of frame 11 and connected to the side wall of frame 11. Bracket 12 is a top wall of case 10. Case 10 includes a conductive case portion. In the present embodiment, both of frame 11 and bracket 12 are the conductive case portion. Both of frame 11 and bracket 12 are formed of, for example, a conductive material such as iron steel (for example, carbon steel such as S45C) or alloy steel (for example, stainless steel).

Stator core 14 is formed of a magnetic material. Stator core 14 may be formed of, for example, a laminate of electrical steel sheets produced by adding silicon to iron or carbon steel. Stator core 14 is fixed to case 10 (frame 11). Specifically, stator core 14 is fixed to the side wall of case 10 (frame 11). Stator core 14 is opposed to rotor core 30. Stator core 14 is spaced by a gap g from rotor core 30 in the radial direction of rotor core 30. Gap g is a gap between an outer peripheral side surface 30c of rotor core 30 and an inner peripheral side surface of stator core 14. Gap g is, for example, 500 µm or less. Stator core 14 surrounds rotor core 30.

Coil 15 is wound around stator core 14. Coil 15 is spaced by a gap from rotor core 30. Stator core 14 surrounds rotor core 30. Coil 15 includes a first coil portion 15a and a second coil portion 15b. First coil portion 15a is exposed from stator core 14 and proximate to bearing 20 (the bottom wall of frame 11 or the bottom wall of case 10) in the axial direction of conductive shaft 18. Second coil portion 15b is exposed from stator core 14 and proximate to bearing 25 (bracket 12 or the top wall of case 10) in the axial direction of conductive shaft 18. Referring to Fig. 2, coil 15 includes, for example, a u-phase coil 15u, a v-phase coil 15v, and a w-phase coil 15w.

Referring to Fig. 1, conductive shaft 18 is formed of a conductive material such as iron steel (for example, carbon steel such as S45C). Conductive shaft 18 is spaced apart from case 10. Specifically, conductive shaft 18 penetrates the conductive case portion (frame 11) through hole 11a. Conductive shaft 18 is spaced apart from the conductive case portion (frame 11, bracket 12).

Bearings 20 and 25 support conductive shaft 18 rotatably relative to the conductive case portion (frame 11, bracket 12). Bearings 20 and 25 include outer rings 22, 27, inner rings 21, 26, a plurality of rolling elements 23, 28, and insulative lubricants 24, 29.

Specifically, frame 11 has a support wall 11b extending in the axial direction of conductive shaft 18. Bearing 20 supports conductive shaft 18 rotatably relative to the conductive case portion (frame 11). Bearing 20 includes outer ring 22, inner ring 21, a plurality of rolling elements 23, and insulative lubricant 24. Outer ring 22 is fixed to support wall 11b. Conductive shaft 18 is press-fitted in inner ring 21. Inner ring 21 and outer ring 22 are formed of a conductive material such as iron steel (for example, carbon steel). A plurality of rolling elements 23 are disposed in a rollable manner between outer ring 22 and inner ring 21. A plurality of rolling elements 23 are formed of, for example, a conductive material such as iron steel (for example, carbon steel). Insulative lubricant 24 is, for example, grease or lubricating oil. Insulative lubricant 24 is sealed in a bearing space between outer ring 22 and inner ring 21.

Bracket 12 has a support wall 12b extending in the axial direction of conductive shaft 18. Bearing 25 supports conductive shaft 18 rotatably relative to the conductive case portion (bracket 12). Bearing 25 includes outer ring 27, inner ring 26, a plurality of rolling elements 28, and insulative lubricant 29. Outer ring 27 is fixed to support wall 12b. Conductive shaft 18 is press-fitted in inner ring 26. Inner ring 26 and outer ring 27 are formed of a conductive material such as iron steel (for example, carbon steel). A plurality of rolling elements 28 are disposed in a rollable manner between outer ring 27 and inner ring 26. A plurality of rolling elements 28 are formed of, for example, a conductive material such as iron steel (for example, carbon steel). Insulative lubricant 29 is, for example, grease or lubricating oil. Insulative lubricant 29 is sealed in a bearing space between outer ring 27 and inner ring 26.

Rotor core 30 is fixed to conductive shaft 18. Rotor core 30 is formed of a magnetic material. Rotor core 30 includes a first main surface 30a proximate to bearing 20 (the bottom wall of frame 11 or the bottom wall of case 10), a second main surface 30b proximate to bearing 25 (bracket 12 or the top wall of case 10), and outer peripheral side surface 30c. Second main surface 30b is opposite to first main surface 30a. Outer peripheral side surface 30c is connected to first main surface 30a and to second main surface 30b.

Rotor core 30 has ring grooves 31a and 31b. Ring groove 31a is formed between coil 15 and conductive shaft 18 in the radial direction of rotor core 30.

Ring groove 31a is formed in first main surface 30a of rotor core 30. Ring groove 31a is formed between first coil portion 15a and conductive shaft 18 in the radial direction of rotor core 30. A width W₁ of ring groove 31a is larger than gap g between stator core 14 and rotor core 30. Width W₁ of ring groove 31a may be 1.0 mm or more. Therefore, a part of electrostatic shield 40 can be easily disposed in ring groove 31a. The dimensional accuracy of electrostatic shield 40 can be relaxed.

A distance D₁ between ring groove 31a and outer peripheral side surface 30c of rotor core 30 is, for example, 1.0 mm or more. Therefore, the gap between electrostatic shield 40 and coil 15 (first coil portion 15a) is increased. The choices of materials of electrostatic shield 40 are increased.

Ring groove 31b is formed in second main surface 30b of rotor core 30. Ring groove 31b is formed between second coil portion 15b and conductive shaft 18 in the radial direction of rotor core 30. A width W₂ of ring groove 31b is larger than gap g between stator core 14 and rotor core 30. Width W₂ of ring groove 31b may be 1.0 mm or more. Therefore, a part of electrostatic shield 45 can be easily disposed in ring groove 31b. The dimensional accuracy of electrostatic shield 45 can be relaxed.

A distance D₂ between ring groove 31b and outer peripheral side surface 30c of rotor core 30 is, for example, 1.0 mm or more. Therefore, the distance between electrostatic shield 45 and coil 15 (second coil portion 15b) is increased. The choices of materials of electrostatic shield 45 are increased.

Rotor core 30 includes a first core portion 33 proximate to stator core 14 relative to ring grooves 31a and 31b, a second core portion 34 proximate to conductive shaft 18 relative to ring grooves 31a and 31b, and a third core portion 35 between first core portion 33 and second core portion 34. First core portion 33, second core portion 34, and third core portion 35 define ring grooves 31a and 31b. The position of third core portion 35 in the radial direction of rotor core 30 corresponds to the positions of ring grooves 31a and 31b in the radial direction of rotor core 30. The height of third core portion 35 (the length of third core portion 35 in the axial direction of conductive shaft 18) is smaller than the height of first core portion 33 (the length of first core portion 33 in the axial direction of conductive shaft 18) and smaller than the height of second core portion 34 (the length of second core portion 34 in the axial direction of conductive shaft 18).

First core portion 33 is between coil 15 and electrostatic shields 40, 45 in the radial direction of rotor core 30. Specifically, first core portion 33 is between first coil portion 15a and electrostatic shield 40 in the radial direction of rotor core 30. First core portion 33 is between second coil portion 15b and electrostatic shield 45 in the radial direction of rotor core 30.

Rotor core 30 is formed of a magnetic material. At least one of first core portion 33, second core portion 34, or third core portion 35 is formed of an insulative material. In the present embodiment, first core portion 33, second core portion 34, and third core portion 35 are formed of a magnetic and insulative material containing resin. In other words, the entire rotor core 30 is formed of a magnetic and insulative material containing resin. Specifically, rotor core 30 (first core portion 33, second core portion 34, and third core portion 35) may be formed of a magnetic and insulative material in which an insulating resin material such as nylon, elastomer, or polyphenylenesulfide (PPS) and a magnetic material such as ferrite, neodymium, or samarium-cobalt alloy are mixed. Rotor core 30 can be produced, for example, by integrally molding a mixture of an insulating resin material and a magnetic material on conductive shaft 18.

Electrostatic shields 40 and 45 are formed of a conductive material such as aluminum alloy, copper, iron steel (for example, carbon steel such as S45C), or alloy steel (for example, stainless steel). Electrostatic shields 40 and 45 may be formed of a magnetic and conductive metal material such as iron steel (for example, carbon steel such as S45C) or alloy steel (for example, stainless steel). Electrostatic shields 40 and 45 may be formed of a non-magnetic and conductive metal material such as aluminum alloy or copper.

Electrostatic shields 40 and 45 are fixed to the conductive case portion (frame 11, bracket 12). Electrostatic shields 40 and 45 are electrically connected to the conductive case portion (frame 11, bracket 12). Specifically, electrostatic shield 40 is fixed to the conductive case portion (frame 11). Electrostatic shield 40 extends from the conductive case portion (frame 11) toward rotor core 30 along the axial direction of conductive shaft 18. Electrostatic shield 40 is electrically connected to the conductive case portion (frame 11). Electrostatic shield 45 is fixed to the conductive case portion (bracket 12). Electrostatic shield 45 extends from the conductive case portion (bracket 12) toward rotor core 30 along the axial direction of conductive shaft 18. Electrostatic shield 45 is electrically connected to the conductive case portion (bracket 12).

Electrostatic shields 40 and 45 have, for example, a cylindrical shape. Electrostatic shields 40 and 45 are disposed between coil 15 and conductive shaft 18. Parts of electrostatic shields 40 and 45 are within ring grooves 31a and 31b. In the radial direction of rotor core 30, electrostatic shields 40 and 45 are opposed to at least a part of coil 15 with first core portion 33 interposed. Electrostatic shields 40 and 45 shield conductive shaft 18 from at least a part of coil 15.

Specifically, electrostatic shield 40 is disposed between first coil portion 15a and conductive shaft 18. A part of electrostatic shield 40 is within ring groove 31a. In the radial direction of rotor core 30, electrostatic shield 40 is opposed to at least a part of first coil portion 15a with first core portion 33 interposed. Electrostatic shield 40 shields conductive shaft 18 from at least a part of first coil portion 15a.

Electrostatic shield 45 is disposed between second coil portion 15b and conductive shaft 18. A part of electrostatic shield 45 is within ring groove 31b. In the radial direction of rotor core 30, electrostatic shield 45 is opposed to at least a part of second coil portion 15b with first core portion 33 interposed. Electrostatic shield 45 shields conductive shaft 18 from at least a part of second coil portion 15b.

Referring to Fig. 2, in order to actuate motor 1, motor 1 is connected to a power supply device 50. Power supply device 50 supplies, for example, an AC power such as three phase AC power to motor 1. Power supply device 50 includes, for example, a power supply 51, a smoothing capacitor 52, an inverter circuit 53, a positive electrode line 54, a negative electrode line 55, and a control circuit 60. Power supply 51 is connected to positive electrode line 54 and negative electrode line 55. Power supply 51 is, for example, a DC power supply. Smoothing capacitor 52 is connected to positive electrode line 54 and negative electrode line 55. Smoothing capacitor 52 stabilizes a DC power between positive electrode line 54 and negative electrode line 55.

Inverter circuit 53 includes a positive electrode input terminal 53a, a negative electrode input terminal 53b, legs 56u, 56v, and 56w, a u-phase output terminal 53u, a v-phase output terminal 53v, and a w-phase output terminal 53w. Positive electrode input terminal 53a is connected to positive electrode line 54. Negative electrode input terminal 53b is connected to negative electrode line 55. Legs 56u, 56v, and 56w are each connected to positive electrode input terminal 53a and negative electrode input terminal 53b. Legs 56u, 56v, and 56w each include an upper arm and a lower arm. The upper arm and the lower arm each include a semiconductor switching element 57 such as an insulated gate bipolar transistor (IGBT) and a freewheeling diode 58 connected in anti-parallel with semiconductor switching element 57.

When semiconductor switching element 57 is an IGBT, the collector terminal of the IGBT in the upper arm is connected to positive electrode input terminal 53a, and the emitter terminal of the IGBT in the lower arm is connected to negative electrode input terminal 53b. U-phase output terminal 53u is connected to leg 56u. V-phase output terminal 53v is connected to leg 56v. W-phase output terminal 53w is connected to leg 56w. U-phase coil 15u is connected to u-phase output terminal 53u. V-phase coil 15v is connected to v-phase output terminal 53v. W-phase coil 15w is connected to w-phase output terminal 53w.

Control circuit 60 is connected to the gate terminal of each of semiconductor switching elements 57. Inverter circuit 53 is controlled by control circuit 60, for example, by the pulse width modulation (PWM) method. Inverter circuit 53 converts a DC power input from power supply 51 to inverter circuit 53 into a three phase AC power (u-phase AC power, v-phase AC power, w-phase AC power). Inverter circuit 53 outputs the three phase AC power to coil 15. Specifically, inverter circuit 53 outputs u-phase AC power to u-phase coil 15u. Inverter circuit 53 outputs v-phase AC power to v-phase coil 15v. Inverter circuit 53 outputs w-phase AC power to w-phase coil 15w. The three phase AC power is supplied to coil 15 to rotate rotor core 30 and conductive shaft 18 to which rotor core 30 is fixed. Motor 1 is thus actuated.

Referring to Fig. 1 and Fig. 2, a neutral point potential Vₙ which is a potential at a neutral point 15n of coil 15 during operation of motor 1 is the average value of voltage of three phase AC power (u-phase voltage Vᵤ of u-phase AC power, v-phase voltage Vᵥ of v-phase AC power, w-phase voltage V_{w} of w-phase AC power). Case 10 is connected to the ground 61. Therefore, the potential difference between coil 15 and case 10 during operation of motor 1 is the neutral point potential.

In motor 1, coil 15 and conductive shaft 18 are capacitively coupled to each other. Conductive shaft 18 and case 10 are capacitively coupled to each other. A first capacitor formed between coil 15 and conductive shaft 18 and a second capacitor formed between conductive shaft 18 and case 10 can be considered as being present between the neutral point potential and the ground 61, and the first capacitor and the second capacitor can be considered as being connected in parallel with each other. The potential difference between coil 15 and case 10 is divided into a potential difference between coil 15 and conductive shaft 18 and a potential difference between conductive shaft 18 and case 10, depending on a capacitance between coil 15 and conductive shaft 18 and a capacitance between conductive shaft 18 and case 10.

Outer rings 22 and 27 of bearings 20 and 25 are electrically connected to the conductive case portion (for example, frame 11, bracket 12), and inner rings 21 and 26 of bearings 20 and 25 are electrically connected to conductive shaft 18. The potential difference between outer rings 22, 27 and inner rings 21, 26 is therefore equal to the potential difference between conductive shaft 18 and case 10. When the shaft rotates at high speed during operation of motor 1, a lubricant film which is a part of insulative lubricants 24, 29 is formed between outer rings 22, 27 and a plurality of rolling elements 23, 28 and between a plurality of rolling elements 23, 28 and inner rings 21, 26. Outer rings 22 and 27 are electrically insulated from inner rings 21 and 26 by insulative lubricants 24 and 29.

When the potential difference between conductive shaft 18 and case 10 exceeds a breakdown voltage of insulative lubricants 24 and 29, high-frequency current called shaft voltage flows between outer rings 22, 27 and inner rings 21, 26. When shaft voltage flows between outer rings 22, 27 and inner rings 21, 26, electric corrosion occurs in at least one of inner rings 21, 26, outer rings 22, 27, or a plurality of rolling elements 23, 28. The lifetime of bearings 20 and 25 is shortened. The lifetime of motor 1 is shortened.

In the present embodiment, at least one of first core portion 33, second core portion 34, or third core portion 35 is formed of an insulative material. Electrostatic shields 40 and 45 are disposed between coil 15 and conductive shaft 18. Electrostatic shields 40 and 45 are electrically connected to case 10. Electrostatic shields 40 and 45 therefore can shield conductive shaft 18 from coil 15. The capacitance between coil 15 and conductive shaft 18 is reduced. The potential difference between coil 15 and conductive shaft 18 during operation of motor 1 is increased, and the potential difference between conductive shaft 18 and case 10 during operation of motor 1 is reduced. The potential difference between conductive shaft 18 and case 10 during operation of motor 1 becomes smaller than the breakdown voltage of insulative lubricants 24 and 29. Dielectric breakdown of insulative lubricants 24 and 29 during operation of motor 1 is prevented. Flowing of shaft current between outer rings 22, 27 and inner rings 21, 26 is prevented. Electric corrosion in inner rings 21, 26, outer rings 22, 27, and a plurality of rolling elements 23, 28 can be prevented. The lifetime of bearings 20 and 25 can be prolonged. The lifetime of motor 1 can be prolonged.

In a modification of the present embodiment, one of frame 11 and bracket 12 may be formed of a conductive material, and the other of frame 11 and bracket 12 may be formed of an insulative material (for example, an insulating resin material such as polybutylene terephthalate (PBT)). In other words, one of frame 11 and bracket 12 is the conductive case portion, but the other of frame 11 and bracket 12 is not necessarily the conductive case portion.

The effects of motor 1 in the present embodiment will be described.

Motor 1 in the present embodiment includes case 10, conductive shaft 18, a bearing (bearing 20, bearing 25, or both of bearing 20 and bearing 25), rotor core 30, stator core 14, coil 15, and an electrostatic shield (for example, electrostatic shield 40, electrostatic shield 45, or both of electrostatic shield 40 and electrostatic shield 45). Case 10 includes a conductive case portion (for example, frame 11, bracket 12, or both of frame 11 and bracket 12). Conductive shaft 18 is spaced apart from case 10. Bearing 20, 25 supports conductive shaft 18 rotatably relative to the conductive case portion. Rotor core 30 is fixed to conductive shaft 18. Stator core 14 is opposed to rotor core 30. Coil 15 is wound around stator core 14. The electrostatic shield is fixed to the conductive case portion. Case 10 contains the bearing, rotor core 30, stator core 14, coil 15, and the electrostatic shield. The bearing includes a conductive outer ring (for example, outer ring 22, outer ring 27, or both of outer ring 22 and outer ring 27), a conductive inner ring (for example, inner ring 21, inner ring 26, or both of inner ring 21 and inner ring 26), a plurality of rolling elements (for example, a plurality of rolling elements 23, a plurality of rolling elements 28, or both of a plurality of rolling elements 23 and a plurality of rolling elements 28), and an insulative lubricant (insulative lubricant 24, insulative lubricant 29, or both of insulative lubricant 24 and insulative lubricant 29). The conductive outer ring is fixed to the conductive case portion. The conductive inner ring is fixed to conductive shaft 18. The rolling elements are disposed in a rollable manner between the conductive outer ring and the conductive inner ring. The insulative lubricant is sealed in a bearing space between the conductive outer ring and the conductive inner ring. Rotor core 30 has a ring groove (ring groove 31a, ring groove 31b, or both of ring groove 31a and ring groove 31b). Rotor core 30 includes first core portion 33 proximate to stator core 14 relative to the ring groove, second core portion 34 proximate to conductive shaft 18 relative to the ring groove (ring groove 31a, ring groove 31b, or both of ring groove 31a and ring groove 31b), and third core portion 35 between first core portion 33 and second core portion 34. At least one of first core portion 33, second core portion 34, or third core portion 35 is formed of an insulative material. The electrostatic shield is disposed between coil 15 and conductive shaft 18 and electrically connected to the conductive case portion. A part of the electrostatic shield is within the ring groove.

The electrostatic shield (for example, electrostatic shield 40, electrostatic shield 45, or both of electrostatic shield 40 and electrostatic shield 45) can shield conductive shaft 18 from coil 15. The capacitance between coil 15 and conductive shaft 18 is reduced. The potential difference between coil 15 and conductive shaft 18 during operation of motor 1 is increased, and the potential difference between conductive shaft 18 and case 10 during operation of motor 1 is reduced. Dielectric breakdown of the insulative lubricant (insulative lubricant 24, insulative lubricant 29, or both of insulative lubricant 24 and insulative lubricant 29) during operation of motor 1 is prevented. Flowing of shaft current between the outer ring (for example, outer ring 22, outer ring 27, or both of outer ring 22 and outer ring 27) and the inner ring (for example, inner ring 21, inner ring 26, or both of inner ring 21 and inner ring 26) is prevented. Occurrence of electric corrosion in the inner ring, the outer ring, and a plurality of rolling elements (for example, a plurality of rolling elements 23, a plurality of rolling elements 28, or both of a plurality of rolling elements 23 and a plurality of rolling elements 28) can be prevented.

Furthermore, since a part of the electrostatic shield (for example, electrostatic shield 40, electrostatic shield 45, or both of electrostatic shield 40 and electrostatic shield 45) is within the ring groove (ring groove 31a, ring groove 31b, or both of ring groove 31a and ring groove 31b), the gap between the electrostatic shield and coil 15 can be increased. Not only a non-magnetic material but also a magnetic material can be selected as the electrostatic shield. The choices of materials of the electrostatic shield can be increased.

In motor 1 in the present embodiment, the electrostatic shield (for example, electrostatic shield 40, electrostatic shield 45, or both of electrostatic shield 40 and electrostatic shield 45) is formed of a magnetic and conductive metal material. Thus, the choices of materials of the electrostatic shield can be increased.

In motor 1 in the present embodiment, the electrostatic shield (for example, electrostatic shield 40, electrostatic shield 45, or both of electrostatic shield 40 and electrostatic shield 45) is formed of a non-magnetic and conductive metal material.

Thus, adverse effects of the electrostatic shield on a distribution of magnetic field formed by coil 15 can be prevented. Reduction in electromagnetic force acting on rotor core 30 can be prevented. Further, occurrence of eddy current in the electrostatic shield due to a magnetic field formed by coil 15 can be prevented. Occurrence of eddy current loss in motor 1 can be avoided. In this way, reduction in efficiency of motor 1 can be prevented.

In motor 1 in the present embodiment, the width of the ring groove (ring groove 31a, ring groove 31b, or both of ring groove 31a and ring groove 31b) is greater than a first gap (gap g) between stator core 14 and rotor core 30.

Thus, the dimensional accuracy and alignment accuracy of the electrostatic shield (for example, electrostatic shield 40, electrostatic shield 45, or both of electrostatic shield 40 and electrostatic shield 45) can be relaxed. The productivity of motor 1 is improved and the cost of motor 1 can be reduced.

In motor 1 in the present embodiment, the width of the ring groove (ring groove 31a, ring groove 31b, or both of ring groove 31a and ring groove 31b) is 1.0 mm or more.

Thus, the dimensional accuracy and alignment accuracy of the electrostatic shield (for example, electrostatic shield 40, electrostatic shield 45, or both of electrostatic shield 40 and electrostatic shield 45) can be relaxed. The productivity of motor 1 is improved and the cost of motor 1 can be reduced.

In motor 1 in the present embodiment, first core portion 33, second core portion 34, and third core portion 35 are formed of a magnetic and insulative material containing resin.

First core portion 33, second core portion 34, and third core portion 35 are all formed of a magnetic and insulative material containing resin. Thus, first core portion 33, second core portion 34, and third core portion 35 can be formed in a batch. The cost of motor 1 can be reduced.

### Second Embodiment

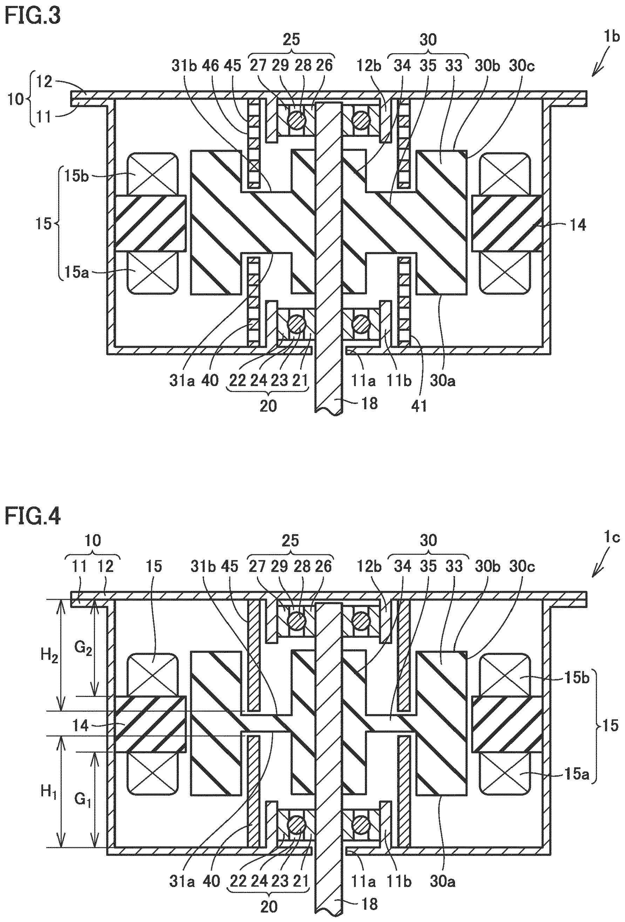

Referring to Fig. 3, a motor 1b in a second embodiment will be described. Motor 1b in the present embodiment includes a configuration similar to motor 1 in the first embodiment and achieves similar effects, but differs mainly in the following points.

In motor 1b, electrostatic shields 40 and 45 have through holes 41 and 46. The axial direction of through holes 41 and 46 may be the radial direction of rotor core 30. Electrostatic shields 40 and 45 have through holes 41 and 46. The axial direction of through holes 41 and 46 may be the radial direction of rotor core 30. A coolant (for example, air, water, or oil) in case 10 can pass through the through holes 41 and 46. Through holes 41 and 46 allow the coolant to flow smoothly in case 10. Coil 15, rotor core 30, and stator core 14 can be efficiently cooled by the coolant.

Motor 1b in the present embodiment achieves the following effects in addition to the effects of motor 1 in the first embodiment.

In motor 1b in the present embodiment, the electrostatic shield (for example, electrostatic shield 40, electrostatic shield 45, or both of electrostatic shield 40 and electrostatic shield 45) has a through hole (for example, through hole 41, through hole 46, or both of through hole 41 and through hole 46).

Thus, the coolant in case 10 (for example, air, water, or oil) can pass through the through hole (for example, through hole 41, through hole 46, or both of through hole 41 and through hole 46). Coil 15, rotor core 30, and stator core 14 can be efficiently cooled by the coolant. Deterioration of coil 15 and change in magnetic characteristics of stator core 14 and magnetic characteristics of rotor core 30 due to heat generated in coil 15 can be suppressed. Reduction in performance of motor 1b is prevented, and the lifetime of motor 1b can be prolonged.

### Third Embodiment

Referring to Fig. 4, a motor 1c in a third embodiment will be described. Motor 1c in the present embodiment includes a configuration similar to motor 1 in the first embodiment but differs mainly in the following points.

In motor 1c, a height Hi of electrostatic shield 40 from the conductive case portion (frame 11) is equal to a gap Gi between the conductive case portion (frame 11) and stator core 14 or greater than gap Gi. Thus, electrostatic shield 40 can shield conductive shaft 18 from the entire first coil portion 15a. A height H₂ of electrostatic shield 45 from the conductive case portion (bracket 12) is equal to a gap G₂ between the conductive case portion (bracket 12) and stator core 14 or greater than gap G₂. Thus, electrostatic shield 45 can shield conductive shaft 18 from the entire second coil portion 15b.

Motor 1c in the present embodiment achieves the following effects in addition to the effects of motor 1 in the first embodiment.

In motor 1c in the present embodiment, stator core 14 is formed of a magnetic and insulative material. The height (height Hi, height H₂) of the electrostatic shield (electrostatic shield 40, electrostatic shield 45, or both of electrostatic shield 40 and electrostatic shield 45) from the conductive case portion (frame 11, bracket 12, or both of frame 11 and bracket 12) is equal to or greater than a second gap (gap G₁, gap G₂) between the conductive case portion and stator core 14.

Thus, the electrostatic shield (electrostatic shield 40, electrostatic shield 45, or both of electrostatic shield 40 and electrostatic shield 45) can shield conductive shaft 18 from the entire portion of coil 15 that is exposed from stator core 14 (first core portion 33, second core portion 34). The capacitance between coil 15 and conductive shaft 18 is further reduced. The potential difference between conductive shaft 18 and case 10 during operation of motor 1c is further reduced. Flowing of shaft current between the outer ring (outer ring 22, outer ring 27, or both of outer ring 22 and outer ring 27) and the inner ring (inner ring 21, inner ring 26, or both of inner ring 21 and inner ring 26) is further prevented. Occurrence of electric corrosion in the inner ring, the outer ring, and a plurality of rolling elements (a plurality of rolling elements 23, a plurality of rolling elements 28, or both of a plurality of rolling elements 23 and a plurality of rolling elements 28) can be further prevented.

### Fourth Embodiment

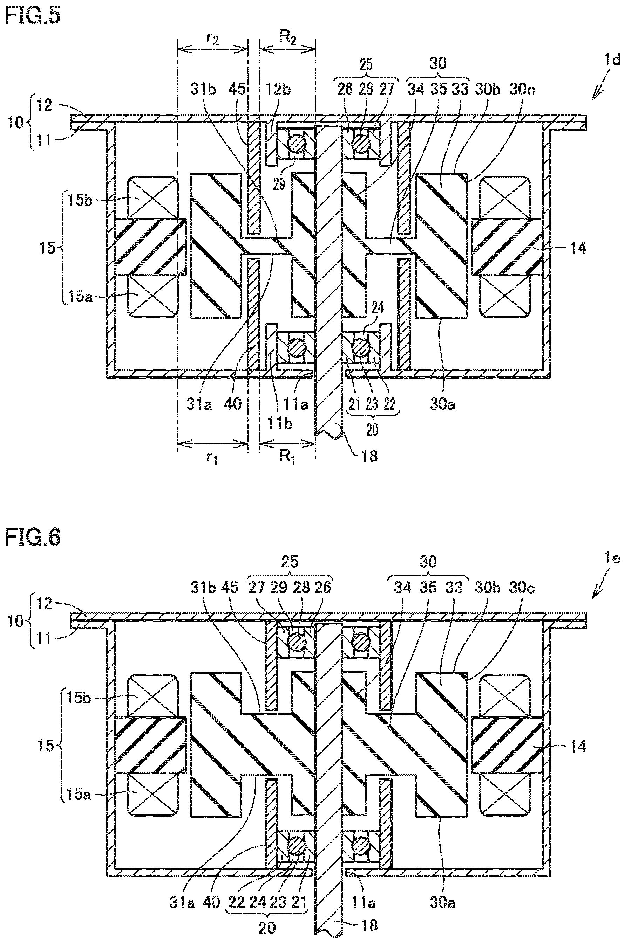

Referring to Fig. 5, a motor 1d in a fourth embodiment will be described. Motor 1d in the present embodiment includes a configuration similar to motor 1c in the third embodiment but differs mainly in the following points.

In motor 1d, a gap r₁ between coil 15 (first coil portion 15a) and electrostatic shield 40 is greater than a gap R₁ between electrostatic shield 40 and conductive shaft 18. Gap r₁ may be, for example, 1.2 or more times as large as gap R₁, may be 1.5 or more times as large as gap R₁, or may be 2.0 or more times as large as gap R₁. Thus, the capacitance between coil 15 and conductive shaft 18 is further reduced.

A gap r₂ between coil 15 (second coil portion 15b) and electrostatic shield 45 is greater than a gap R₂ between electrostatic shield 45 and conductive shaft 18. Gap r₂ may be, for example, 1.2 or more times as large as gap R₂, may be 1.5 or more times as large as gap R₂, or may be 2.0 or more times as large as gap R₂. Thus, the capacitance between coil 15 and conductive shaft 18 is further reduced.

In a modification of the present embodiment, in a motor in another embodiment (for example, motor 1 in the first embodiment), gap r₁ between coil 15 (first coil portion 15a) and electrostatic shield 40 may be greater than gap R₁ between electrostatic shield 40 and conductive shaft 18, and gap r₂ between coil 15 (second coil portion 15b) and electrostatic shield 45 may be greater than gap R₂ between electrostatic shield 45 and conductive shaft 18.

Motor 1d in the present embodiment achieves the following effects in addition to the effects of motor 1c in the third embodiment.

In motor 1d in the present embodiment, a third gap (gap r₁, gap r₂, or both of gap r₁ and gap r₂) between coil 15 and the electrostatic shield (electrostatic shield 40, electrostatic shield 45, or both of electrostatic shield 40 and electrostatic shield 45) is greater than a fourth gap (gap R₁, gap R₂, or both of gap R₁ and gap R₂) between the electrostatic shield and conductive shaft 18.

Thus, the capacitance between coil 15 and conductive shaft 18 is further reduced. The potential difference between conductive shaft 18 and case 10 during operation of motor 1d is further reduced. Flowing of shaft current between the outer ring (outer ring 22, outer ring 27, or both of outer ring 22 and outer ring 27) and the inner ring (inner ring 21, inner ring 26, or both of inner ring 21 and inner ring 26) is further prevented. Occurrence of electric corrosion in the inner ring, the outer ring, and a plurality of rolling elements (a plurality of rolling elements 23, a plurality of rolling elements 28, or both of a plurality of rolling elements 23 and a plurality of rolling elements 28) can be further prevented.

### Fifth Embodiment

Referring to Fig. 6, a motor 1e in a fifth embodiment will be described. Motor 1e in the present embodiment includes a configuration similar to motor 1 in the first embodiment but differs mainly in the following points.

In motor 1e, bearing 20 is fixed to the conductive case portion (frame 11) via electrostatic shield 40. Specifically, outer ring 22 is fixed to electrostatic shield 40. Support wall 11b (see Fig. 1) is omitted.

Bearing 25 is fixed to the conductive case portion (bracket 12) via electrostatic shield 45. Specifically, outer ring 27 is fixed to electrostatic shield 45. Support wall 12b (see Fig. 1) is omitted.

Motor 1e in the present embodiment achieves the following effects in addition to the effects of motor 1 in the first embodiment.

In motor 1e in the present embodiment, the bearing (bearing 20, bearing 25, or both of bearing 20 and bearing 25) is fixed to the conductive case portion (frame 11, bracket 12, or both of frame 11 and bracket 12) via the electrostatic shield (electrostatic shield 40, electrostatic shield 45, or both of electrostatic shield 40 and electrostatic shield 45). Thus, motor 1e can be downsized.

### Sixth Embodiment

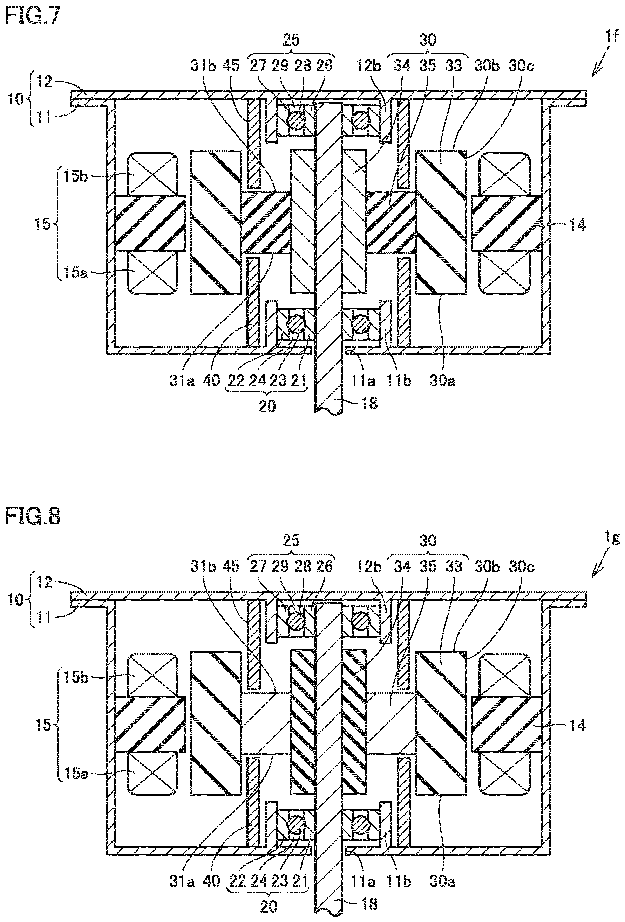

Referring to Fig. 7, a motor 1f in a sixth embodiment will be described. Motor 1f in the present embodiment includes a configuration similar to motor 1 in the first embodiment but differs mainly in the following points.

In motor 1f, second core portion 34 is formed of a magnetic and conductive metal material such as iron steel (for example, carbon steel such as S45C) or alloy steel (for example, stainless steel). Third core portion 35 is formed of a magnetic and insulative material containing resin. Third core portion 35 may be formed of a magnetic and insulative material in which an insulating resin material such as nylon, elastomer, or polyphenylenesulfide (PPS) and a magnetic material such as ferrite, neodymium, or samarium-cobalt alloy are mixed.

In the present embodiment, rotor core 30 can be formed, for example, by the following steps. Second core portion 34 is press-fitted on conductive shaft 18. Then, the shaft and second core portion 34 are placed in a mold (not shown). A mixture of an insulating resin material and a magnetic material is injected into the mold. The mixture of an insulating resin material and a magnetic material is integrally molded on second core portion 34 to form first core portion 33 and third core portion 35.

Motor 1f in the present embodiment achieves the following effects in addition to the effects of motor 1 in the first embodiment.

In motor 1f in the present embodiment, second core portion 34 is formed of a magnetic and conductive metal material. First core portion 33 and third core portion 35 are formed of a magnetic and insulative material containing resin.

Second core portion 34 can protect conductive shaft 18 from heat shock that occurs when first core portion 33 and third core portion 35 formed of a magnetic and insulative material containing resin are integrally molded on second core portion 34. Breakage of conductive shaft 18 during use of motor 1f can be prevented. The lifetime of motor 1f can be prolonged.

### Seventh Embodiment

Referring to Fig. 8, a motor 1g in a seventh embodiment will be described. Motor 1g in the present embodiment includes a configuration similar to motor 1 in the first embodiment but differs mainly in the following points.

In motor 1g, second core portion 34 is formed of a magnetic and insulative material containing resin. Second core portion 34 may be formed of, for example, a magnetic and insulative material in which an insulating resin material such as nylon, elastomer, or polyphenylenesulfide (PPS) and a magnetic material such as ferrite, neodymium, or samarium-cobalt alloy are mixed. Third core portion 35 is formed of a magnetic and conductive metal material such as iron steel (for example, carbon steel such as S45C) or alloy steel (for example, stainless steel).

The height of third core portion 35 (the length of third core portion 35 in the axial direction of conductive shaft 18) is smaller than the height of first core portion 33 (the length of first core portion 33 in the axial direction of conductive shaft 18) and smaller than the height of second core portion 34 (the length of second core portion 34 in the axial direction of conductive shaft 18). Thus, third core portion 35 is more likely to be broken than first core portion 33 and second core portion 34 by centrifugal force acting on rotor core 30 during operation of motor 1g. However, first core portion 33 and second core portion 34 are formed of a magnetic and insulative material containing resin, whereas third core portion 35 is formed of a magnetic and conductive metal material. Third core portion 35 is formed of a material having a higher mechanical strength than first core portion 33 and second core portion 34. Thus, breakage of third core portion 35 by centrifugal force acting on rotor core 30 during operation of motor 1g can be prevented.

In the present embodiment, rotor core 30 can be formed, for example, by the following steps. Conductive shaft 18 and third core portion 35 are placed in a mold (not shown). Then, a mixture of an insulating resin material and a magnetic material is injected into the mold. The mixture of an insulating resin material and a magnetic material is integrally molded on the shaft and third core portion 35 to form first core portion 33 and second core portion 34.

Motor 1g in the present embodiment achieves the following effects in addition to the effects of motor 1 in the first embodiment.

In motor 1g in the present embodiment, first core portion 33 and second core portion 34 are formed of a magnetic and insulative material containing resin. Third core portion 35 is formed of a magnetic and conductive metal material.

Breakage of third core portion 35 can be prevented. The lifetime of motor 1g can be prolonged.

### Eighth Embodiment

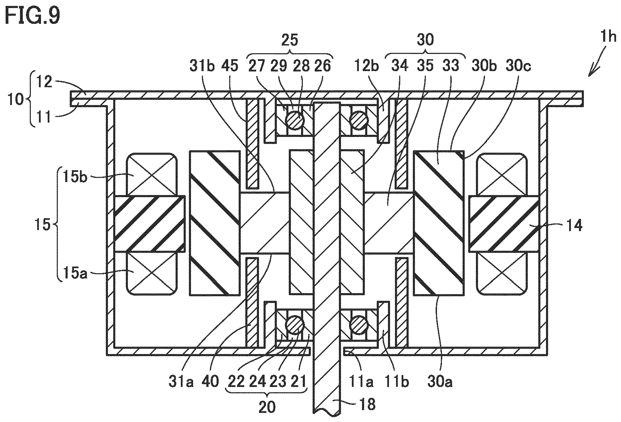

Referring to Fig. 9, a motor 1h in an eighth embodiment will be described. Motor 1h in the present embodiment includes a configuration similar to motor 1 in the first embodiment but differs mainly in the following points.

In motor 1h, second core portion 34 and third core portion 35 are formed of a magnetic and conductive metal material such as iron steel (for example, carbon steel such as S45C), alloy steel (for example, stainless steel), or electrical steel sheets. Also in the present embodiment, similar to the seventh embodiment, third core portion 35 is formed of a magnetic and conductive metal material. Thus, breakage of third core portion 35 by centrifugal force acting on rotor core 30 during operation of motor 1h can be prevented.

In the present embodiment, rotor core 30 can be formed, for example, by the following steps. Second core portion 34 and third core portion 35 are press-fitted on conductive shaft 18. Then, the shaft, second core portion 34, and third core portion 35 are placed in a mold (not shown). A mixture of an insulating resin material and a magnetic material is injected into the mold. The mixture of an insulating resin material and a magnetic material is integrally molded on third core portion 35 to form first core portion 33.

Motor 1h in the present embodiment achieves the following effects in addition to the effects of motor 1 in the first embodiment.

In motor 1h in the present embodiment, first core portion 33 is formed of a magnetic and insulative material containing resin. Second core portion 34 and third core portion 35 are formed of a magnetic and conductive metal material.

Thus, breakage of third core portion 35 can be prevented. The lifetime of motor 1h can be prolonged. Further, second core portion 34 and third core portion 35 can protect conductive shaft 18 from heat shock that occurs when first core portion 33 formed of a magnetic and insulative material containing resin is integrally molded on third core portion 35. Breakage of conductive shaft 18 during use of motor 1h can be prevented. The lifetime of motor 1h can be prolonged.

The first to eighth embodiments and modifications thereof disclosed here should be understood as being illustrative rather than being limitative in all respects. At least two of the first to eighth embodiments and modifications thereof disclosed here may be combined in a consistent manner. The scope of the present disclosure is shown not in the foregoing description but in the claims, and it is intended that all modifications that come within the meaning and range of equivalence to the claims are embraced here.

### REFERENCE SIGNS LIST

1, 1b, 1c, 1d, 1e, 1f, 1g, 1h motor, 10 case, 11 frame, 11a hole, 11b, 12b support wall, 12 bracket, 14 stator core, 15 coil, 15u u-phase coil, 15v v-phase coil, 15w w-phase coil, 15a first coil portion, 15b second coil portion, 15n neutral point, 18 conductive shaft, 20, 25 bearing, 21, 26 inner ring, 22, 27 outer ring, 23, 28 rolling element, 24, 29 insulative lubricant, 30 rotor core, 30a first main surface, 30b second main surface, 30c outer peripheral side surface, 31a, 31b ring groove, 33 first core portion, 34 second core portion, 35 third core portion, 40, 45 electrostatic shield, 41, 46 through hole, 50 power supply device, 51 power supply, 52 smoothing capacitor, 53 inverter circuit, 53a positive electrode input terminal, 53b negative electrode input terminal, 53u u-phase output terminal, 53v v-phase output terminal, 53w w-phase output terminal, 54 positive electrode line, 55 negative electrode line, 56u, 56v, 56w leg, 57 semiconductor switching element, 58 freewheeling diode, 60 control circuit, 61 ground.

## Claims

1. A motor comprising:
a case including a conductive case portion;
a conductive shaft spaced apart from the case;
a bearing supporting the conductive shaft rotatably relative to the conductive case portion;
a rotor core fixed to the conductive shaft;
a stator core opposed to the rotor core;
a coil wound around the stator core; and
an electrostatic shield fixed to the conductive case portion, wherein
the case contains the bearing, the rotor core, the stator core, the coil, and the electrostatic shield,
the bearing includes a conductive outer ring, a conductive inner ring, a plurality of rolling elements, and an insulative lubricant, the conductive outer ring being fixed to the conductive case portion, the conductive inner ring being fixed to the conductive shaft, the rolling elements being disposed in a rollable manner between the conductive outer ring and the conductive inner ring, the insulative lubricant being sealed in a bearing space between the conductive outer ring and the conductive inner ring,
the rotor core has a ring groove,
the rotor core includes a first core portion proximate to the stator core relative to the ring groove, a second core portion proximate to the conductive shaft relative to the ring groove, and a third core portion between the first core portion and the second core portion,
at least one of the first core portion, the second core portion, or the third core portion is formed of an insulative material,
the electrostatic shield is disposed between the coil and the conductive shaft and electrically connected to the conductive case portion, and
a part of the electrostatic shield is within the ring groove.

2. The motor according to claim 1, wherein the electrostatic shield is formed of a magnetic and conductive metal material.

3. The motor according to claim 1, wherein the electrostatic shield is formed of a non-magnetic and conductive metal material.

4. The motor according to any one of claims 1 to 3, wherein a width of the ring groove is greater than a first gap between the stator core and the rotor core.

5. The motor according to claim 4, wherein the width of the ring groove is 1.0 mm or more.

6. The motor according to any one of claims 1 to 5, wherein the electrostatic shield has a through hole.

7. The motor according to any one of claims 1 to 6, wherein
the stator core is formed of a magnetic and insulative material, and
a height of the electrostatic shield from the conductive case portion is equal to or greater than a second gap between the conductive case portion and the stator core.

8. The motor according to any one of claims 1 to 7, wherein a third gap between the coil and the electrostatic shield is greater than a fourth gap between the electrostatic shield and the conductive shaft.

9. The motor according to any one of claims 1 to 8, wherein the bearing is fixed to the conductive case portion via the electrostatic shield.

10. The motor according to any one of claims 1 to 9, wherein the first core portion, the second core portion, and the third core portion are formed of a magnetic and insulative material containing resin.

11. The motor according to any one of claims 1 to 9, wherein
the second core portion is formed of a magnetic and conductive metal material, and
the first core portion and the third core portion are formed of a magnetic and insulative material containing resin.

12. The motor according to any one of claims 1 to 9, wherein
the first core portion and the second core portion are formed of a magnetic and insulative material containing resin, and
the third core portion is formed of a magnetic and conductive metal material.

13. The motor according to any one of claims 1 to 9, wherein
the first core portion is formed of a magnetic and insulative material containing resin, and
the second core portion and the third core portion are formed of a magnetic and conductive metal material.
